# EUROPEAN PATENT APPLICATION

(11) **EP 2 309 712 A1**
(43) Date of publication of application: **13.04.2011**
(21) Application number: 09172646.3
(22) Date of filing: 09.10.2009
(51) Int. Cl.: H04M 3/56, H04M 3/42

(54) **Method of providing presence information of a multiparty circuit-switched voice call to involved parties**

(71) Applicant: Telefonaktiebolaget L M Ericsson (Publ), 164 83 Stockholm (SE)
(72) Inventor: Witzel, Andreas, 52134, Herzogenrath (DE); Perkuhn, Heiko, 52062, Aachen (DE)
(74) Representative: Pfeifer, Torsten

(57) **Abstract**

A method of providing presence information of a multiparty circuit-switched voice call, conference call to parties (102a,c,d) of the multiparty circuit-switched voice call. The method being executed by a call control node or MSC-S (108a), the method comprising generating party related i.e. presence status information of the parties (102a,c,d) using a descriptive language i.e. XML, and publishing the party related information to the parties (102a,c,d) such that the party related information is accessible by the parties (102a,c,d) involved in the conference call H.248 protocol is used for signalling between the call control node and the circuit switched user.

## Description

### Technical field

The invention relates to telecommunication, in particular to a method of and a call control node for providing improved information of a multiparty circuit-switched voice call to parties of the multiparty circuit-switched voice call. Further, the invention relates to a program element and to a computer-readable medium.

### Background

It is generally accepted that Global System for Mobile Communications (GSM) circuit-switched voice calls are still predominantly used during communications between parties despite the availability of IP Multimedia Core Network Subsystem (IMS) standards. One particular feature of GSM is the integration of a multiparty supplementary service (MPTY) offering the ability of circuit-switched voice calls between more than two parties. In particular, one example of such a multiparty call is a so called conference call to which a conference leader subscribes and in which further parties participate.

However, the usability of the MPTY supplementary service may be limited in the sense that the participants may not get any feedback about identities and states and of the conference participants, e.g. who may be participating and whether a particular party may be currently on hold or active.

It is further known that IMS standards enable packet-switched communications between parties and also offer a multiparty service. A further example of a multiparty service is known as "Google Talk" which relies on packet-switched communications between at least two parties using features such as instant messaging and voice calls. Here, instant messaging refers to exchanging multimedia data between parties participating in the multiparty call and presenting the obtained multimedia data to the parties. Further, this multiparty service offers the possibility to present e.g. connection states of the parties to the parties.

Therefore there may be a desire to improve the circuit-switched MPTY supplementary service in order to achieve a usability comparable to the packet switched multiparty service.

### Summary

It is an object of the invention to provide a method, a call control node, a program element, and a computer-readable medium which allow for an improved usability of multiparty services during multiparty circuit switched voice calls.

The object is achieved by the subject-matter of the independent claims. Advantageous embodiments are described in the further claims.

According to an exemplary aspect of the invention, a method of providing improved information of a multiparty circuit-switched voice call to parties of the multiparty circuit-switched voice call is provided. The method is executed by a call control node. Party related information of the parties is generated using a descriptive language. Further, the party related information is published to the parties such that the party related information is obtainable by the parties.

According to another exemplary aspect of the invention, a call control node for providing improved information of a multiparty circuit-switched voice call to parties of the multiparty circuit-switched voice call is provided. The call control node is adapted to execute a method as defined above.

According to another exemplary aspect of the invention, a program element is provided. The program element is, when being executed by a processor, adapted to carry out or control a method as defined above.

According to another exemplary aspect of the invention, a computer-readable medium is provided. In the computer-readable medium a computer program for providing improved information of a multiparty circuit-switched voice call to parties of the multiparty circuit-switched voice call is stored. The computer program is, when being executed by a processor, adapted to carry out a method as defined above.

In the context of this application, the term "multiparty circuit-switched voice call" may particularly denote circuit-switched communications, i.e. communications according to the 2G and 3G standards, during which voice data may be exchanged between parties of the multiparty call via circuit-switched data transmission. In particular, a multiparty circuit-switched voice call may be a conference call during which voice data may be exchanged between the parties of the conference call via circuit-switched data transmission.

The term "party" may particularly denote a subscriber or participant of the multiparty circuit-switched voice call. In particular, a party may comprise a party subscriber, for example, a person, who may subscribe to or participate in the multiparty circuit-switched voice call, and a party terminal which may be associated with a party subscriber. A party terminal may be a user terminal such as a mobile phone or a locally fixed telephone. In particular, more than one party subscriber may be assigned to one party terminal, and more than one party terminal may be associated with one party subscriber.

In particular, a multiparty circuit-switched voice call leading party may be a party of the multiparty circuit switched voice call which may control or manage the multiparty circuit switched voice call. In particular, the multiparty circuit-switched voice call leading party may be a party which may be subscribed to the multiparty call service and may establish or initiate the multiparty circuit-switched voice call. The call leading party may be further adapted to terminate the multiparty circuit-switched voice call and/or to disconnect further parties from the multiparty circuit-switched voice call. In particular, the multiparty circuit-switched voice call leading party may be referred to in the following using the terms "call leading party" or "conference leading party".

The term "party related information" may particularly denote any information of the parties which may participate in the multiparty circuit-switched voice call. In particular, the party related information may also comprise any information of parties which may currently communicate with a call leading party but may not be part of the multiparty circuit-switched voice call. Such parties may be e.g. put on hold by the call leading party or may wait to be connected to the call leading party. In particular, the party related information may comprise information of at least one party or of more than one party the multiparty circuit-switched voice call. In particular, the party related information may comprise information, for example state information, of all parties of the multiparty circuit-switched voice call.

The term "descriptive language" may particularly denote any (e.g. computer usable) language with which the party related information is generated. In particular, the descriptive language may be a descriptive markup language, further particularly an extensible markup language (XML), a standard generalized markup language (SGML), or a hyper text markup language (HTML). In particular, more than one descriptive language may be used for generating the party related information.

According to the exemplary aspects of the invention, a communication architecture may be provided which may enable improved information or extended information of a multiparty circuit-switched voice call being available to the parties of the multiparty circuit-switched voice call. A call control node may generate party related information of the parties participating in the multiparty circuit-switched voice call using a descriptive language, particularly a descriptive markup language (e.g. XML, SGML, and HTML), thereby the generated party related information comprising a formatted form, e.g. a description document. Further, the generated party related information may be published to the parties, particularly to the party terminals, whereby the parties, particularly the party subscribers associated with the party terminals, may be adapted to gain knowledge of the party related information.

The party related information may be obtained from the call control node and be presented to the party subscribers by the party terminals. In particular, the party terminals may comprise appropriate capabilities or functionalities for obtaining the party related information and for presenting the obtained party related information to the party subscribers. Such capabilities of the party terminals may comprise XML Document Management (XDM) client capabilities to obtain the party related information and graphical user interface (GUI) capabilities to display the party related information to the party subscribers. Such party terminals may be adapted as mobile phones.

Alternatively or additionally, the party related information may be retrieved or downloaded from the call control node by a further Aggregation Proxy (AP) or any other comparable node comprising XDM client functionalities, may be transferred to e.g. a personal computer (PC; e.g. a locally fixed PC or a laptop) or a smart phone and may be then displayed to the party subscribers using GUI capabilities of the PC or the smart phone. In particular, the AP may implement XDM client capabilities for subscribing to the party related information and for converting the party related information into a web page, may implement a web portal for offering the possibility of retrieving the party related information by web browsers, and may perform access authorization for determining the accessibility of the parties to the web portal. Thus, the AP may offer an increased security level for retrieving the party related information as a party terminal number (e.g. a user phone number) and/or a name for the party related information may be requested when signing in the AP web portal.

The method, the call control node, the program element, and the computer-readable medium may offer the incorporation of packet-switched capabilities into a multiparty circuit switched voice call. Therefore the feature richness and the functionality of the multiparty circuit-switched voice call may be significantly enhanced and improved, as the amount of available and useable information may be significantly increased.

Further, the communications architecture according to the exemplary aspects of the invention may enable a usable and user friendly way how to adapt the multiparty circuit-switched voice call based on the obtained party related information. In particular, a call management and a content of the voice data of the multiparty circuit-switched voice call may be adapted by at least one of the parties in response to the obtained party related information. In particular, a call management may comprise excluding parties from the call or integrating parties into the call by the conference leading party. A content of the voice data may relate to which information may be exchanged or transferred between the parties. Making the party related information available to all parties may allow all parties, not only the conference leading party, to determine the content of the exchanged voice data.

Further, capabilities of nowadays available party terminals such as mobile phones may be entirely utilized, since the provided multiparty communications service may meet the recent hardware evolution of mobile phones. In particular, mobile phones comprising XDM client capabilities and graphical user interface capabilities may be used during a multiparty circuit-switched voice call comprising such improved feature richness.

The aspects defined above and further aspects of the invention are apparent from the examples of embodiment to be described hereinafter and are explained with reference to these examples of embodiment.

### Brief description of the drawings

Embodiments of the invention will be described in more detail hereinafter with reference to examples but to which the scope of the invention is not limited.
Fig. 1 is a block diagram illustrating a communications system for providing improved information of a multiparty circuit-switched voice call.
Fig. 2 is a flow diagram illustrating a method of providing improved information of a multiparty circuit-switched voice call to parties participating in the multiparty circuit-switched voice call according to an exemplary embodiment of the invention.
Fig. 3 is a flow diagram illustrating a method of providing improved information of a multiparty circuit-switched voice call to parties participating in the multiparty circuit-switched voice call according to a further exemplary embodiment of the invention.
Fig. 4 is a block diagram illustrating a connection model underlying the communications system of Fig. 1.
Fig. 5A illustrates a description of the connection model of Fig. 4 based on a H.248 protocol.
Fig. 5B illustrates a respective description of the connection model of Fig. 4 based on an extensible markup language.
Fig. 5C illustrates a graphical representation of party related information presented to parties of a multiparty circuit-switched voice call.
Fig. 6 is a block diagram illustrating the communications system of Fig. 1 in more detail.

Fig. 7 is a block diagram illustrating a call control node according an exemplary embodiment of the invention.

### Detailed description

The illustration in the drawing is schematic. In different drawings, similar or identical elements are provided with the same reference signs.

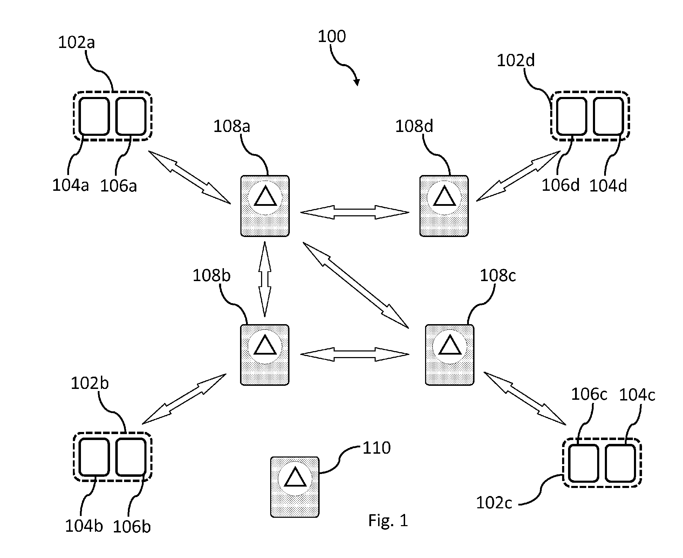

Referring to Fig. 1, a communications architecture, particularly a communications system 100 is illustrated which comprises parties 102a-d. Each one of the parties 102a-d comprises a party subscriber 104a-d and a party terminal 106a-d associated with the corresponding party subscriber 104a-d. The party subscribers 104a-d are typically persons and the party terminals 106a-d mobile phones. The parties 102a-d are adapted to communicate with one another via call control nodes 108a-d forming part of the communications system 100. The call control nodes 108a-d may be Mobile Switching Center servers (MSC-S).

For the communications system 100 shown, a multiparty circuit-switched voice call has already been established between the parties 102a, c, d. However, the multiparty circuit-switched voice call may also be currently set up. The party 102a represents a call leading party 102a which is adapted to set up or to initiate and to manage the multiparty circuit-switched voice call with the further parties 102b-d. The call leading party 102a may further disconnect parties from or terminate the multiparty circuit-switched voice call. The party 102b currently comprises a held call-state and is not connected the multiparty circuit-switched voice call, wherein the parties 102c, d comprise connected to the call-states.

The call control node 108a is the serving call control node 108a of the multiparty circuit-switched voice call which is adapted to communicate with the call leading party 102a and to set up or initiate or disconnect parties from or to terminate the multiparty circuit-switched voice call with the parties 102c, d. Communications between the call control nodes 108a-d and between the call control nodes 108a-d and the corresponding parties 102a-d are indicated by double arrows.

Further, the communications system 100 comprises a presence server 110 which is adapted to communicate with at least one of the call control nodes 108a-d and with the parties 102a-d, e.g. for publishing party related information as described in more detail below.

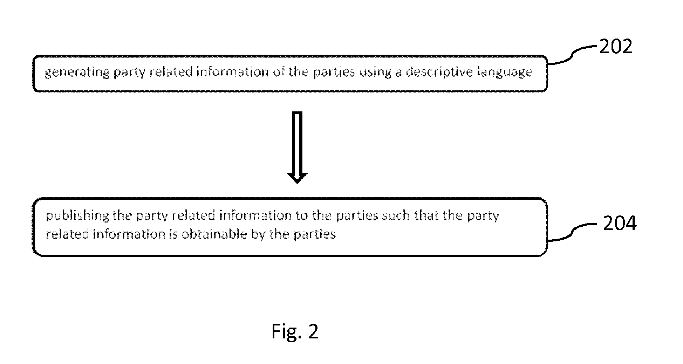

Referring to Fig. 2, a method of providing improved party related information of parties of a multiparty circuit-switched voice call to the parties of the multiparty circuit-switched voice call will be explained.

The method comprises a step 202 of generating party related information of the parties using a descriptive language and a step 204 of publishing the party related information to the parties such that the party related information is obtainable by the parties.

In the following, further embodiments of the method of providing improved information of a multiparty circuit-switched voice call to parties of the multiparty circuit-switched voice call will be explained. However, these embodiments also apply to the respective call control node, to the respective program element, and to the respective computer-readable medium.

The multiparty circuit-switched voice call may be established via the call control node, e.g. wherein the multiparty circuit-switched voice call has already been established by the call control node and/or is currently set up by the call control node. In the first case, the party related information may be generated and published especially for an ongoing multiparty circuit-switched voice call, wherein in the latter case, the party related information may at least be generated or may be generated and published during this set-up of the multiparty circuit-switched voice call.

In particular, the call control node executing the method may be a serving call control node with which a conference leading party may communicate during setting up the multiparty circuit-switched voice call and/or during the established multiparty circuit-switched voice call. In particular, the call control node may control the multiparty circuit-switched voice call, particularly a user plane of the data transmission path of the multiparty circuit-switched voice call, thereby the call control node comprising improved or extended or comprehensive information of the parties, particularly of the party terminals, participating in the multiparty circuit-switched voice call.

In particular, further call control nodes may be involved in the multiparty circuit-switched voice call, wherein the further call control nodes may communicate with the serving call control node and with the further parties, particularly with the party terminals of the further parties.

The party related information may comprise at least one of a group consisting of identities of the parties and connection states of the parties. In particular, the identities of the parties may be at least one of a group consisting of Mobile Subscriber Integrated Services Digital Network Numbers (MSISDN) of the parties and name identities of the parties received via a Calling Name Presentation (CNAP) service. In particular, the connection states of the parties may comprise at least one of a group consisting of a connected to the (multiparty) call-state, a held (multiparty) call-state, a waiting call-state, a private call between particular parties of the (multiparty) call-state, and a one-way direction (multiparty) call-state. Thus, when obtaining the party related information, the parties may be informed of themselves and the further participants of the multiparty circuit-switched voice call, thereby allowing for adapting the call management and the content of the voice data of the multiparty circuit-switched voice call. In particular, managing the call may comprise disconnecting parties from or integrating further parties into the multiparty circuit-switched voice call. In particular, adapting the content of the voice data may refer to adapt which information may be exchanged between the parties.

Generating the party related information may comprise converting at least one description element of a protocol used by the call control node for the multiparty circuit-switched voice call into at least one description element of the descriptive language. In particular, converting may comprise mapping the at least one description element of the protocol used by the call control node for the multiparty circuit-switched voice call with the at least one description element of the descriptive language. This measure may allow for a very effective and implementation-friendly way to convert existing information on the parties into a formatted form such as a (e.g. XML) description document such that the information may be available to the parties of the multiparty circuit-switched voice call, since the necessary information may be obtained from signaling of the call control node with a user plane of the transmission path of the multiparty circuit-switched voice call. Further, additional measures for collecting information of the parties may be obsolete for generating the party related information, thereby facilitating the method.

In particular, the conversion may comprise a one-to-one conversion of the at least one description element of the protocol into the at least one description element of the descriptive language. Alternatively or additionally, more description elements of the protocol may be converted into one or more description elements of the descriptive language, wherein a number of the description elements of the protocol and a number of the description elements of the descriptive language may be equal to one another or may not be equal to one another. In particular, those description elements of the protocol may be selected in the conversion which may be necessary for creating a useful and completely formatted description of the multiparty circuit-switched voice call.

In particular, the protocol may be the H.248 protocol which may be used in signaling between the call control node and (e.g. at least one media gateway node within) the user plane of the data transmission path of the multiparty circuit-switched voice call.

In particular, description elements of the protocol may comprise at least one of a group consisting of a connection model (e.g. terminations, streams or contexts), termination properties of the contexts (e.g. descriptors), and properties of a particular context.

In particular, description elements of the descriptive language may comprise at least one of a group consisting of tags and attributes.

Publishing the party related information to the parties may comprise sending obtaining information to a presence server. Here, the term "obtaining information" may particularly denote any availability information of the availability of the party related information and/or accessibility information of how the party related information may be obtained from the call control node. In particular, the obtaining information may comprise a link and optionally an etag associated with the party related information which may be sent to the presence server. The link may point to the party related information which may be generated by the call control node and may be comprised in the call control node, wherein the link may be used for obtaining or retrieving the party related information. The etag may indicate the actual state of the party related information in terms of a version of the party related information. Using a presence mechanism to make the party related information available for parties is very implementation-friendly and efficient for publishing the generated party related information and for obtaining this party related information from the parties. Here, the party related information may remain within the call control node such that the availability of the party related information may be published to the users, thereby increasing the security level of the provision of the party related information to the parties in terms of requiring an additional measure executed by the parties to obtain the party related information upon receipt of the availability of the party related information. In this context, the call control node may act, for example, as a XML Document Management (XDM) server for the party related information. The parties may use the (published) obtaining information to retrieve the party related information. In order to be notified of the availability of the party related information, the parties, particularly the party terminals, may use the Presence mechanism in that the parties may subscribe to the generated party related information. In particular, a XDM client of the party terminals may subscribe to the XML description document whose availability may be published by the presence server. The call control node providing the generated party related information may be implicitly known to the parties, particularly to the party terminals, further particularly to the XDM clients of the party terminals. For instance, an address such as sip: <MSISDN of conference leadin party >@provider.com may be used for subscribing to the party related information.

The presence server may notify the subscribed parties upon the availability of the party related information, particularly of the party related information comprising a descriptive language format, for example the (e.g. XML) description document, associated with the party related information.

The subscription and notification may be based on the SIP Subscribe service and on the SIP Notify procedure, thereby using the standard protocol in signaling within the control plane of the transmission path of the multiparty circuit-switched voice call.

Publishing the party related information to the parties may comprise receiving from at least one of the parties a request for obtaining the party related information, wherein the request may be based on the XML Configuration Access Protocol (XCAP). In particular, a XCAP GET procedure may be used for requesting the party related information from the call control node.

Accordingly, the call control node may send the party related information in a descriptive language format to the parties, particularly to the party terminals, particularly by including said information in one or more messages capable of transporting the party related information in descriptive language, e.g. in a SIP 200 OK message. Thus, the parties participating in the multiparty circuit-switched voice call may receive the party related information in descriptive language, for example a (e.g. XML) description document, from the call control node.

Publishing may be based on the Session Initiation Protocol (SIP) e.g. using the afore-mentioned SIP 200 OK message. Thus, a communications protocol used for communicating within the control plane of the transmission path of the multiparty circuit-switched voice call may be used for publishing the (e.g. XML) description document, thereby facilitating the publishing of the party related information to the parties in an implementation-friendly manner.

Publishing the party related information to the parties may comprise determining access permissions of the parties for the party related information, and sending the access permissions to the presence server. In particular, determining the access permissions may comprise generating the access permissions particularly based on knowledge of the call control node of the parties participating in the multiparty circuit-switched voice call. In particular, the call control node may be adapted to generate an Authorization Rule Document to be sent to the presence server. Sending the access permissions, particularly the Authorization Rule Document, may be performed simultaneously or subsequently to sending the obtaining information to the presence server. In addition, the call control node may be adapted to generate a generic Authorization Rule Document, which may grant access to the obtaining information for all parties, or for a predefined list of parties. Furthermore, the presence server may be configured to grant access for all parties without explicit Authorization Rule Document. Thus, only those parties for which access permissions have been positively or not negatively determined by the call control node may be allowed to fetch the published party related information from the call control node.

In particular, party related information of parties which may be communicating with the call leading party and may not be part of the multiparty circuit-switched voice call may be also published to the parties of the multiparty circuit-switched voice call. These non-participating parties may comprise or may be in a held-state or in a waiting call-state. Further parties of the multiparty circuit-switched voice call may only obtain a limited or a restricted amount of the party related information associated with these non-participating parties. In particular, such a restricted or limited amount of the party related information may comprise connection states of these non-participating parties but not the identities of these non-participating parties. In particular, the call leading party may obtain the complete party related information, i.e. the party related information of the parties participating in the multiparty circuit-switched voice call and the party related information associated with these non-participating parties. In particular, a restricted access to an amount of the party related information may be accomplished by adding privacy settings to the access permissions of the parties for the party related information.

The method may comprise generating updated party related information using the descriptive language upon a change in the multiparty circuit-switched voice call having occurred and publishing the updated party related information to the parties such that the updated party related information may be obtainable by the parties. Therefore the current party related information in terms of a dynamic (e.g. XML) description document may be available upon every change in the parties of the multiparty circuit-switched voice call may have occurred, thereby enabling to adapt the call management and the content of the voice data of the multiparty circuit-switched voice call. In this context, the SIP Subscribe and SIP Notify mechanism may be used as a new notification may be sent from the call control node to the parties. Here, the etag (element) may be used to indicate the revision of the (e.g. XML) description document. A remote party may be adapted to check the current etag of the current (e.g. XML) description document with the newly received etag and, by that, may be adapted to determine whether the received obtaining information may be more recent or not.

In the following, the method shown in Fig. 2 will be explained with respect to Fig. 1.

According to the method, the serving call control node 108a is adapted to generate in the first step 202 party related information of the parties 102a, c, d using a descriptive language and, in the second step 204, is adapted to publish (204) the generated party related information to the parties 102a, c, d such that the party related information is obtainable by the parties 102a, c, d.

Generating may further comprise converting at least one description of a protocol used by the call control node 108a for the multiparty circuit-switched voice call into at least one description element of the descriptive language. Generating may further comprise determining access permissions of the parties 102a, c, d for the party related information.

Publishing the party related information may be based on using the presence server 110 such that the party related information is notified by the presence server 110 to be available to the parties 102a, c, d. When publishing, the call control node 108a may send obtaining information to the presence server 110 and receive from at least one of the parties 102a, c, d a request for obtaining the party related information. Publishing may further comprise determining access permissions of the parties 102a, c, d for the party related information.

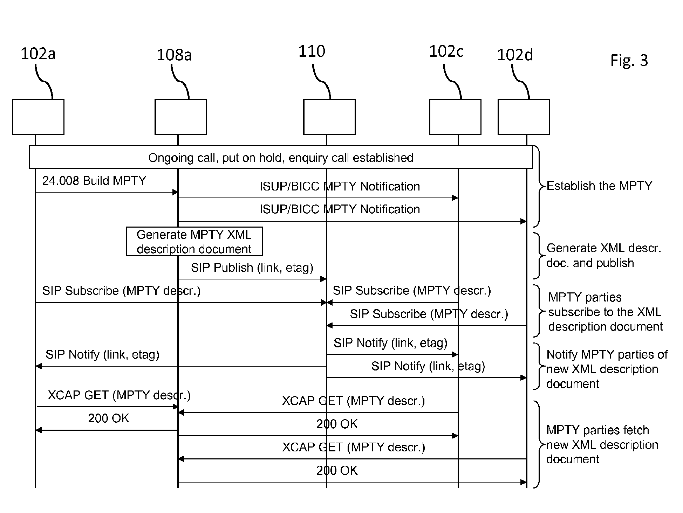

Referring to Fig. 3, nodes, messages between the nodes and processes executed at the nodes for providing improved party related information of the parties 102a, c, d of the multiparty circuit-switched voice call to the parties 102a, c, d is illustrated. For purpose of illustration, only the call leading party 102a, the parties 102c, d being in the connected to the call-state, the serving call control node 108a, and the presence server 110 are shown in Fig. 3, whereas further nodes of Fig. 1 such as the call control nodes 108b-d and the party 102b are not depicted.

Initially, the call leading party 102a is communicating with the party 102b via the call control nodes 108a, b. The party 102a is adapted to operate on the supplementary multiparty service and puts the party 102b in a held call-state and enquires a multiparty circuit-switched voice call with the parties 102c, d. The call control node 108a communicates with the call control nodes 108c, d in order to establish the multiparty circuit-switched voice call between the parties 102a, c, d.

Hence, the party 102a sends a Build MPTY message to the call control node 108a using the protocol 24.008 and enquires the multiparty circuit-switched voice call to be established with the parties 102c and 102d.

Thereupon, the call control node 108a sends a MPTY notification to the parties 102c, d via the call control nodes 108c, d using the ISDN User Part (ISUP) protocol and the Bearer Independent Call Control (BICC) protocol. The parties 102c, d are then in the connected to the call-state.

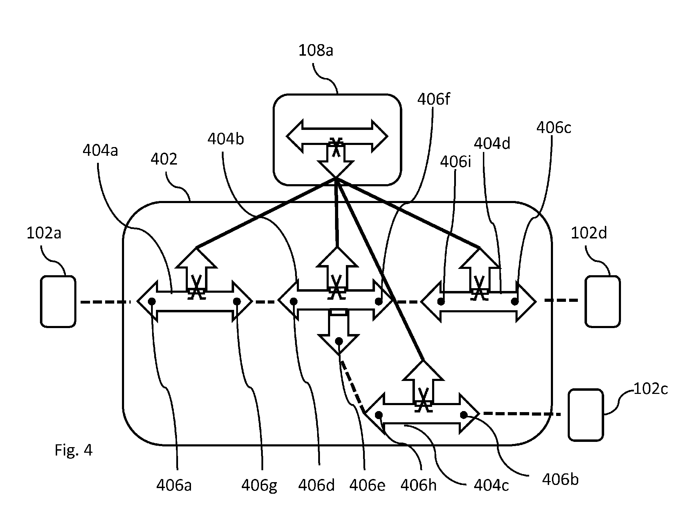

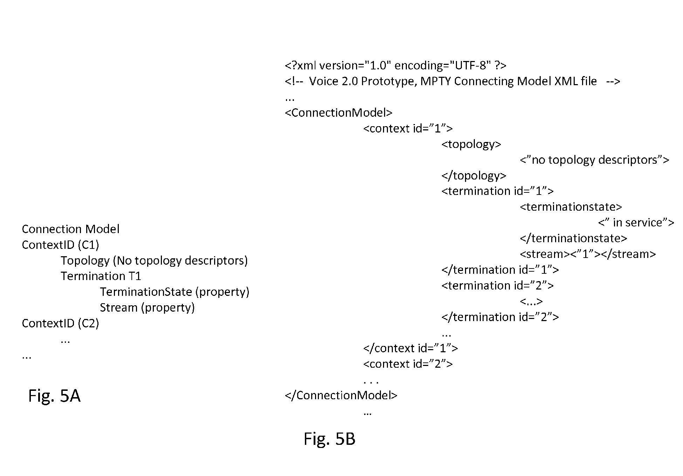

Thereupon, the call control node 108a generates party related information in that the call control node 108a generates a MPTY XML description document which will be described in more detail with reference to Fig. 4, 5A, B. The XML description document is stored by the call control node 108a. The XML description document comprises information on the parties 102a, c, d. However, it is also possible that the XML description document comprises information of the party 102b which is currently in a held call-state.

The call control node 108a then publishes the generated XML description document by sending a SIP publish message to the presence server 110. The message comprises a link and an etag associated with the XML description document. The call control node 108a preferably also generates permission accesses to the party related information for each one the parties 102a, c, d (optionally also for the party 102b) in that the call control node 108a generates an Authorization Rule Document which is also sent to the presence server 110. In this embodiment shown, only the parties 102a, c, d receive an access permission for the party related information as the parties 102a, c, d participate in the multiparty circuit-switched voice call and the party 102b does not participate.

The availability of the generated XML description document is then notified to the parties 102a, c, d using the SIP Subscribe and Notify mechanism. Each of the parties 102a, c, d sends a subscribing message to the presence server 110 which in turn notifies the parties 102a, c, d of the availability of the generated XML description document by sending SIP Notify messages containing an etag and a link associated with the party related information.

Thereupon, each of the parties 102a, c, d sends a XCAP GET message to the call control node 108a for retrieving the party related information, i.e. the generated XML description document, from the call control node 108a.

The call control node 108a then sends the generated XML description document to the parties 102a, c, d using a SIP 200 OK message.

Upon every change within the multiparty circuit-switched voice call, particularly in a change in the party related information, the call control node 108a generates a new XML description document. For instance, the party 102b may be integrated into the multiparty circuit-switched voice call such that the party related information now comprises information on the party 102b. The call control node 108a automatically publishes the updated XML description document. The presence server 110 then notifies the availability of the updated XML description document to the parties 102a-d by sending SIP Notify messages containing a link and an updated etag associated with the party related information. Thus the parties 102a-d are adapted to retrieve the updated XML description document from the call control node 108 by sending respective XCAP messages to the call control node 108a. Responsive to the received XCAP messages, the call control node 108a sends the party related information to the parties in that the call control node 108a sends respective SIP 200 OK messages to the parties.

In the following, an exemplary embodiment of the content of the generated party related information will be explained in more detail with reference to Fig. 4, 5A, B. In the following, it is assumed that only the parties 102a, c, d participate in the multiparty circuit-switched voice call and only the party related information of the parties 102a, c, d is published to the parties 102a, c, d. However, it may be possible that party related information of the party 102b may be comprised in the party related information, whereas an amount of the party related information associated with the party 102b may be restricted for the parties 102c, d in that the presence of the party 102b but not the identity of the party 102b may be published to the parties 102c, d. The call leading party 102a may be adapted to obtain the complete party related information associated with the parties 102a-d.

In general, the generated party related information to be used in the XML description document comprises the identities and the connection states of the parties 102a, c, d.

The identity of the parties 102a, c, d are Mobile Subscriber Integrated Service Digital Network Numbers (MSISDNs) uniquely describing the subscribing parties 102a, c, d, particularly the party terminals 106a, c, d. The MSISDNs of the parties 102a, c, d are received either as connected line IDs for all outgoing calls from the call leading party 102a or as B-numbers for all incoming calls to the call leading party 102a. Here, the serving call control node 108a of the call leading party 102a comprises complete information on all involved MSISDNs of the parties 102a, c, d which are part of the multiparty circuit-switched voice call.

Further, name identities of the parties 102a, c, d may be included as the identities of the parties 102a, c, d, wherein the name identities are received via the GSM supplementary service Calling Name Presentation (CNAP) which is used for transporting the name information of the parties 102a-d. In particular, the name information received via the CNAP service is either based on receiving the name information for at least one party 102a, c, d or based on the call control node 108a querying the name information of at least one party 102a, c, d from a database of an operator of the respective party 102a, c, d using the known MSISDN of the party 102a, c, d as search key using the same query interface as established for the CNAP service.

Connection states of the parties 102a, c, d comprise actual states of each one of the parties 102a, c, d during setting up the multiparty circuit-switched voice call or during the ongoing multiparty circuit-switched voice call. Examples of such states are a connected to the call-state, a private communication between particular parties-state, a held call-state or a waiting call-state or any single direction audio path call-state. In the shown embodiment, the parties 102a, c, d are in connected to the call-states.

The connection states of the parties 102a, c, d are obtained from a connection model of the multiparty circuit-switched voice call and are retrieved from the H.248 protocol which is used by the call control node 108a to control the user plane of the transmission path of the multiparty circuit-switched voice call, particularly to control at least one media gateway node in the user plane of the transmission path. In particular, the call control node 108a derives the connection model by using its information about the media gateway node 402 which is known from the H.248 protocol.

Referring to Fig. 4, an exemplary embodiment of the connection model of the multiparty circuit-switched voice call of Fig. 1 is shown. The connection model comprises a media gateway node 402 which comprises four contexts 404a-d.

The context 404a is connected to the call leading party 102a via a termination 406a of the context 404a, the context 404c is connected to the party 102c via a termination 406b of the context 404c, and the context 404d is connected to the party 102d via a termination 406c of the context 404d. Thus, the termination 406a of the context 404a represents a mobile access radio interface for the party 102a, and the terminations 406c, d of the context 404c and the context 404b represent trunk interfaces via the core network to the parties 102c, d. The context 404b acts as mediating context between the access contexts 404a, c, d in that terminations 406d-f of the context 404b are connected to respective terminations 406g-i of the contexts 404a, c, d.

In order to include further parties into the multiparty circuit-switched voice call, the media gateway node 402 may comprise further contexts which are connected to the contexts 404b and the respective further parties.

During the generation of the party related information, the information included in the H.248 protocol in terms of the connection model and the identities of the parties 102a, c, d are converted into the XML language, in order to create the XML description document (Fig. 5A, B). For the conversion, description elements of the H.248 protocol are mapped into description elements of the XML language. Here, description elements of the H.248 protocol comprise the connection model, such as terminations of the contexts, the contexts and the voice streams. As shown in Fig. 5A, a context ID of one of the contexts 504a-d comprises a topology of the particular context, the properties of the terminations in terms of a termination state and a stream etc. Fig. 5B shows the corresponding XML description document using XML tags and elements describing the respective context having the particular topology and termination properties of two terminations of the context. In particular, according to RFC 3525, the term "no topology descriptors" relates to all terminations having a both-way connection to all further terminations.

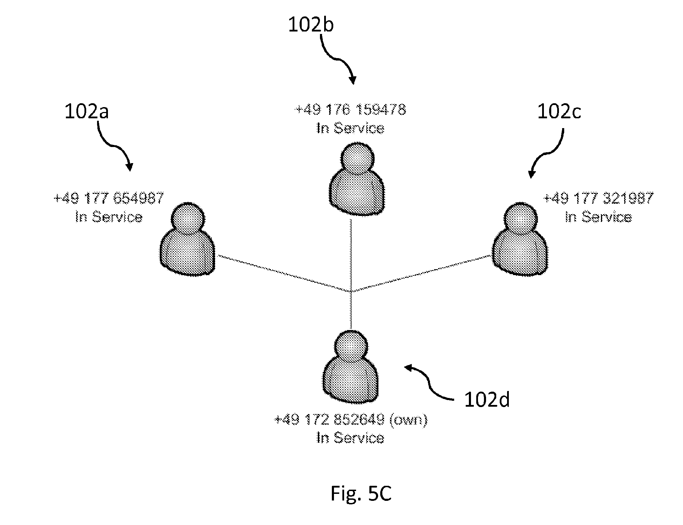

The information comprised in the description document is used to render a graphical representation of the party related information. An exemplary embodiment of such a graphical representation of the party related information is illustrated in Fig. 5C. For purpose of illustration, the party 102b is connected to the multiparty circuit-switched voice call.

The graphical representation of the party related information comprises a connection diagram showing the parties 102a-d participating in the multiparty circuit-switched voice call. The parties 102a-d are illustrated using symbols of persons. Each party 102a-d is identified by its personal telephone number. For example, the party 102a is identified by the mobile phone number +49 177 654987. The particular party 102d to which the party related information is presented is marked using the term "(own)". Further, the call leading party may be identified using a particular symbol or term. The connection states of the parties 102a-d are displayed using the terms "In Service" which stand for connected to the call-states. Further terms or symbols identifying other connection states may be used.

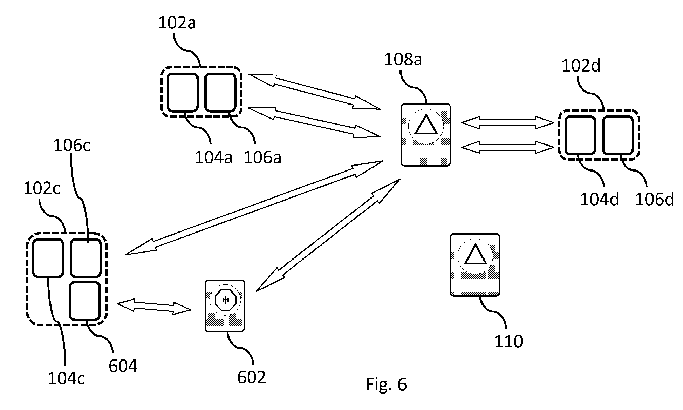

As shown in Fig. 6, the published party related information in terms of the generated XML description document is either directly or indirectly obtained by the parties 102a, c, d depending on the capabilities of the party terminals 106a, c, d. In the shown embodiment, the party terminal 106a of the call leading party 102a comprises a XDM client and a graphical user interface, as the party terminal 106d of the party 102d does. The party terminal 106c of the party 102c does not comprise a XDM client. However, an Aggregation Proxy (AP) 602 and a locally fixed personal computer (PC) 604 are associated with the party 102c. Instead of the PC 604 a laptop or a smart phone can be used. The AP 602 can be assigned to the party 102c or can be independent from the party 102c such that more parties can use the AP 602.

Subsequent to the call control node 108a receiving requests from the parties 102a, d for obtaining the party related information, the generated and published XML description document is downloaded by the party terminals 106a, 106d and displayed to the party subscribers 104a, 104d. In Fig. 6, the double arrows between the parties 102a, d and the call control node 108a indicate the bothway communications between the parties 102a, d and the call control node 108a in terms of using 24.008 signaling procedures for establishing and controlling the multiparty circuit-switched voice call and the HTTP/XCAP retrieval of the party related information. In Fig. 1, both types of communications are indicated by using only a single double arrow.

As the party terminal 106c is designed as a mobile phone without XDM client capabilities, the request for obtaining the party related information is sent from the AP 602 to the call control node 108a. The AP 602 then converts the obtained XML description document into a web interface, thereby the XML description document being displayed to the party subscriber 104c using a web browser installed on the PC 604. In Fig. 6, a single double arrow between the call control node 108a and the AP 602 indicates the HTTP/XCAP retrieval of the XML description document, and a single double arrow between the PC 602 and the AP 604 indicates the data communications between the PC 604 and the AP 602 for while retrieving the web page. A single double arrow between the party terminal 102c and the call control node 108a indicates the 24.008 signaling.

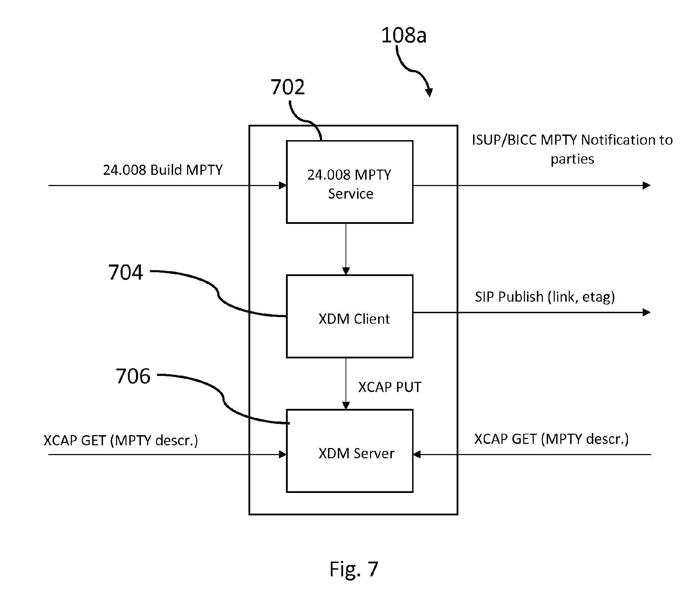

Referring to Fig. 7, a call control node executing the method is described in more detail.

In general, the call control node is adapted to provide improved information of parties of a multiparty circuit-switched voice call to the parties of the circuit-switched voice call. Further, the call control node is adapted to execute the method as described with respect to Fig. 2.

Further embodiments of the call control node for providing improved information of a multiparty circuit-switched voice call to parties of the multiparty circuit-switched voice call will be explained in the following. However, these embodiments also apply to the respective method, to the respective program element, and to the respective computer-readable medium.

The call control node may comprise components for executing the method as described with respect to Fig. 2.

In particular, the call control node may comprise a generating component adapted to generate party related information of the parties using a descriptive language and a publishing component adapted to publish the party related information to the parties such that the party related information may be obtainable by the parties.

In particular, the generating component may be adapted to convert at least one description element of a protocol used by the call control node for the multiparty circuit-switched voice call into at least one description element of the descriptive language. Alternatively or additionally, the generating component may be adapted to generate updated party related information using the descriptive language upon a change in the multiparty circuit-switched voice call may having occurred.

In particular, the publishing component may be adapted to send obtaining information to a presence server, to receive from at least one of the parties a request for obtaining the party related information, to operate based on the Session Initiation Protocol (SIP), to determine access permissions of the parties for the party related information, and/or to publish updated party related information to the parties such that the updated party related information may be obtainable by the parties.

In particular, the generating component may also be adapted to determine access permissions of the parties for the party related information.

At least one of the functionalities of the generating component and/or the publishing component as described above may be implemented in the respective generating component and/or the respective publishing component. Additionally or alternatively, at least one of the functionalities of the generating component and/or the publishing component as described above may be incorporated into a separate component which particularly may be controlled by the respective generating component and/or the respective publishing component.

The call control node may comprise a XML Document Management (XDM) client, thereby allowing for providing the functionality of generating the party related information and partly publishing the party related information to the parties in the sense that the XDM client may be adapted to send obtaining information to a presence server, e.g. to use the SIP Publish procedure, in order to send a link and optionally an etag to the presence server. Further, the XDM client may be adapted to determine access permissions of the parties for the party related information. Further, the XDM client may be adapted to generate updated party related information and optionally updated access permissions of the parties for the updated party related information.

The call control node may comprise a XDM server, which may be adapted to store the generated party related information. In particular, the XDM server may allow for providing or participating in the functionality of publishing the party related information. The generated party related information may be transferred from the XDM client to the XDM server using a XCAP PUT procedure. In particular, the XDM server may be adapted to receive from at least one of the parties a request for obtaining the party related information such that the party related information may be obtainable by the parties from the XDM server. The request for obtaining the party related information may be based on the XCAP protocol, particularly on the GET procedure. Further, the XDM server may be adapted to store determined access permissions of the parties for the party related information. Further, the XDM server may be adapted to store updated party related information and optionally updated access permissions of the parties for the updated party related information.

The call control node may be adapted as Mobile Switching Center (MSC) or as Mobile Switching Center server (MSC-S), thereby allowing for 2G and 3G communications.

Again referring to Fig. 7, a particular embodiment of the call control node will be explained, wherein the call control node is identical to the call control node shown in Fig. 1.

The call control node 108a comprises a 24.008 MPTY service 702 which is adapted to receive the Build Command for setting up the multiparty circuit-switched voice call and to send a notification of the set-up of the multiparty circuit-switched voice call to the parties 102b-d based on ISUP/BICC. The 24.008 MPTY service is adapted to generate the plain and unformatted party related information based on the H.248 protocol based on which the XML description document will be generated.

Further, the call control node 108a comprises an internal MPTY XDM client 704 which is adapted to generate the party related information in terms of the XML description document. Here, the 24.008 MPTY service is adapted to communicate with the XDM client 704, in order to provide necessary information of the identities and connection states of the parties 102a, c, d (and optionally of the party 102b) to the XDM client 704. In turn, the XDM client 704 is adapted to use the SIP Publish service to publish the party related information to the parties 102a, c, d.

Further, the call control node 108a comprises a content XDM-server 706 from which the party related information can be retrieved by the parties 102a, c, d using HTTP/XCAP, particularly the HTTP/XCAP GET procedure. The XDM client 704 is adapted to provide the generated party related information to the content XDM-server 706 via a XCAP PUT procedure. The XDM client 704 acts as generating component adapted to generate the (updated) party related information using XML and/or the access permissions for the parties 102a, c, d. The XDM client 704 and the XDM server 706 serves as publishing component adapted to publish the party related information to the parties 102a, c, d. In particular, the XDM client 704 is adapted to send the (updated) etag and the link to the presence server 110, while the XDM server 706 receives the request from the parties 102a, c, d for obtaining the XML description document. Thus, the XDM client 704 both fulfills functionalities of the generating component and (partly) the publishing component.

## Claims

1. A method of providing improved information of a multiparty circuit-switched voice call to parties (102a, c, d) of the multiparty circuit-switched voice call, the method being executed by a call control node (108a), the method comprising
- generating party related information of the parties (102a, c, d) using a descriptive language (202), and
- publishing the party related information to the parties (102a, c, d) such that the party related information is obtainable by the parties (102a, c, d).

2. The method according to claim 1, wherein the multiparty circuit-switched voice call is established via the call control node (108a).

3. The method according to claim 1 or 2, wherein the party related information comprises at least one of a group consisting of identities of the parties (102a, c, d) and connection states of the parties (102a, c, d).

4. The method according to any one of claims 1 to 3, wherein generating the party related information comprises converting at least one description element of a protocol used by the call control node (108a) for the multiparty circuit-switched voice call into at least one description element of the descriptive language.

5. The method according to any one of claims 1 to 4, wherein publishing the party related information to the parties (102a, c, d) comprises sending obtaining information to a presence server (110).

6. The method according to any one of claims 1 to 5, wherein publishing the party related information to the parties (102a, c, d) comprises receiving from at least one of the parties (102a, c, d) a request for obtaining the party related information.

7. The method according to any one of claims 1 to 6, wherein the publishing is based on the Session Initiation Protocol (SIP) Publish service.

8. The method according to any one of claims 1 to 7, wherein publishing the party related information to the parties (102a, c, d) comprises determining access permissions of the parties (102a, c, d) for the party related information.

9. The method according to any one of claims 1 to 8, the method comprising generating updated party related information using the descriptive language upon a change in the multiparty circuit-switched voice call having occurred and publishing the updated party related information to the parties (102a, c, d) such that the updated party related information is obtainable by the parties (102a, c, d).

10. A call control node (108a) for providing improved information of a multiparty circuit-switched voice call to parties (102a, c, d) of the multiparty circuit-switched voice call, the call control node (108a) being adapted to execute a method according to any one of claims 1 to 9.

11. The call control node (108a) according to claim 10, wherein the call control node (108a) comprises a XML Document Management (XDM) client (704).

12. The call control node (108a) according to claim 10 or 11, wherein the call control node (108a) comprises a XML Document Management (XDM) server (706).

13. The call control node (108a) according to any one of claims 10 to 12, wherein the call control node (108a) is adapted as Mobile Switching Center server (MSC-S).

14. A program element, which program element, when being executed by a processor, is adapted to carry out or control a method according to any one of claims 1 to 9.

15. A computer-readable medium, in which a computer program for providing improved information of a multiparty circuit-switched voice call to parties (102a, c, d) of the multiparty circuit-switched voice call is stored, which computer program, when being executed by a processor, is adapted to carry out or control a method according to any one of claims 1 to 9.
